(19) Europäisches Patentamt
European Patent Office
Office européen des brevets

(11) Veröffentlichungsnummer: 0 001 604
B1

(12) # EUROPÄISCHE PATENTSCHRIFT

(21) Anmeldenummer: 78101099.6

(22) Anmeldetag: 07.10.78

(51) Int. Cl.³: C 07 C 119/048, C 07 C 118/02, C 08 G 18/77

(54) **Aromatische diisocyanate, ein Verfahren zu ihrer Herstellung, sowie ihre Verwendung zur Herstellung von Polyurethanen**

(30) Priorität: 20.10.77 DE 2747072

(43) Veröffentlichungstag der Anmeldung: 02.05.79 Patentblatt 79/09

(45) Bekanntmachung des Hinweises auf die Patenterteilung: 23.07.80 Patentblatt 80/15

(84) Benannte Vertragsstaaten: BE DE FR GB NL

(56) Entgegenhaltungen: US - A - 3 375 264

(73) Patentinhaber: Bayer AG
Zentralbereich Patente, Marken und Lizenzen
D-5090 Leverkusen 1, Bayerwerk
(DE)

(72) Erfinder: Schwindt, Jürgen, Dr.
Heymannstrasse 38
D-5090 Leverkusen 1
(DE)
Grögler, Gerhard, Dr.
von-Diergardt-Strasse 46
D-5090 Leverkusen 1
(DE)
Uhrhan, Paul, Dr.
Brunnenweg 27
D-5068 Odenthal
(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 001 604 B1

Courier Press, Leamington Spa, England.

# Aromatische Diisocyanate, ein Verfahren zu ihrer Herstellung, sowie ihre Verwendung zur Herstellung von Polyurethanen

Die vorliegende Erfindung betrifft neue aromatische Diisocyanate mit Alkylmercapto- oder Benzylmercapto-Substituenten in ortho-Stellung zu mindestens einer Isocyanatgruppe, welche ausschließlich Alkylmercapto- oder Benzylmercapto-substituierte aromatische Ringe aufweisen, ein Verfahren zur Herstellung der neuen Verbindungen, sowie ihre Verwendung zur Herstellung von Polyurethankunststoffen.

In der US-PS 3 375 264 sind bereits asymmetrisch Alkylmercapto-substituierte, d.h. auch keine derartige Substituenten aufweisende aromatische Ringe enthaltende, Diisocyanate beschrieben. In ortho-Stellung zu den Isocyanatgruppen Thioäther-Substituenten aufweisende aromatische Diisocyanate, welche ausschließlich derartige Substituenten aufweisende aromatische Ringe aufweisen, sind bislang noch nicht bekannt geworden. Es handelt sich bei diesen Verbindungen um neue, äußerst interessante Aufbaukomponenten für Polyurethane, die physiologisch weitgehend unbedenklich sind, die Herstellung insbesondere von Polyurethanelastomeren eines ausgezeichneten mechanischen Werteniveaus gestatten, und die schließlich durch geeignete Wahl der Thioäther-Substituenten bezüglich ihrer Reaktivität auf einfach Weise dem jeweiligen Verwendungszweck angepaßt werden können. Von besonderem Interesse sind hierbei die Diisocyanato-benzole, welche lediglich zu einer Isocyanatgruppe in ortho-Stellung mit Thioätherresten substituiert sind, da diese Diisocyanate Isocyanatgruppen einer unterschiedlichen Reaktivität aufweisen, wobei der Unterschied der Reaktionsbereitschaft der Isocyanatgruppen durch geeignete Wahl der Substituenten variiert werden kann.

Gegenstand der vorliegenden Erfindung sind somit aromatische Diisocyanate, gekennzeichnet durch das ausschließliche Vorliegen von Alkylmercapto- oder Benzylmercapto-substituierten aromatischen Ringen, wobei diese Substituenten zu mindestens einer Isocyanatgruppe in ortho-Stellung angeordnet sind.

Gegenstand der vorliegenden Erfindung ist auch ein Verfahren zur Herstellung dieser aromatischen Diisocyanate, welches dadurch gekennzeichnet ist, daß man aromatische Diamine, welche ausschließlich Alkylmercapto- oder Benzylmercapto-substituierte aromatische Ringe aufweisen, wobei diese Substituenten in ortho-Stellung zu mindestens einer Aminogruppe angeordnet sind, einer an sich bekannten Phosgenierungsreaktion unterzieht.

Gegenstand der vorliegenden Erfindung ist schließlich auch die Verwendung dieser Diisocyanate als Aufbaukomponente bei der Herstellung von Polyurethankunststoffen nach dem Diisocyanat-Polyadditionsverfahren.

Bei den bevorzugten erfindungsgemäßen Dissocyanaten handelt es sich um solche der Formel

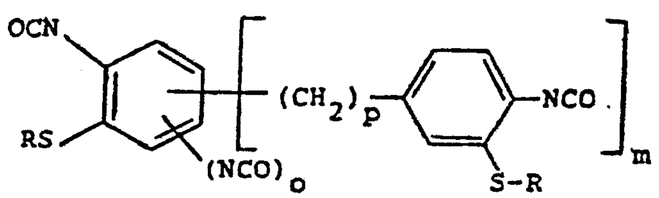

in welcher

R für einen gesättigten aliphatischen Kohlenwasserstoffrest mit 1—4 Kohlenstoffatomen oder eine Benzylgruppe steht,

m für 0 oder 1 steht,

o in Abhängigkeit von m für 0 oder 1 steht, so daß m + 0 stets 1 ergibt und

p für 0 oder 1 steht.

Diese neuen erfindungsgemäßen Diisocyanate werden erfindungs gemäß durch an sich bekannte Phosgenierung der entsprechenden Diamine der Formel

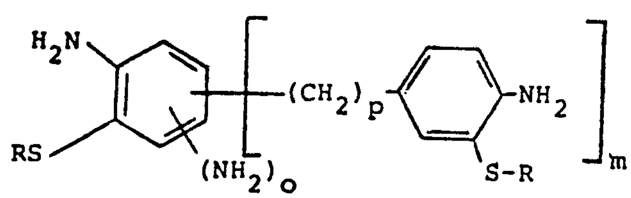

erhalten, wobei

R, m, o und p die obengenannte Bedeutung haben.

Im folgenden sind einige erfindungemäß als Ausgangsmaterial einzusetzende Diamine (und Literaturstellen, in denen ihre Herstellung beschrieben wird) beispielhaft aufgeführt:

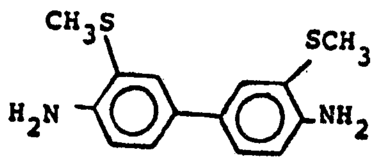

K.Brand; Chem. Ber. *70,* 284 (1937)

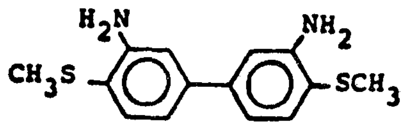

H.H.Hodgson und P.F.Holt; J.Chem. Soc. 1937, 37—38

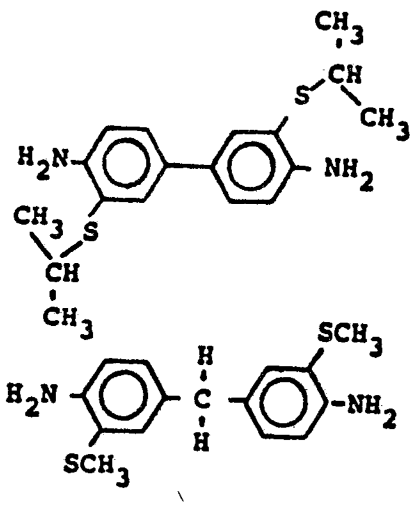

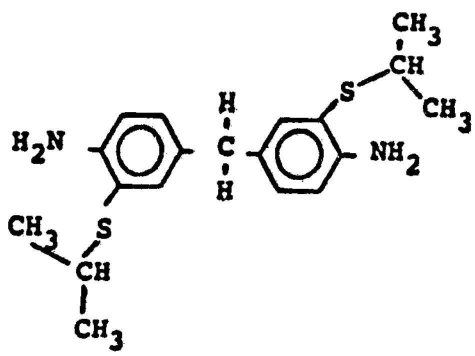

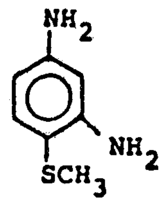

CA 57, P 7466

Die Herstellung der Diamine kann nach an sich bekannten Verfahren erfolgen:

I) Herstellung von

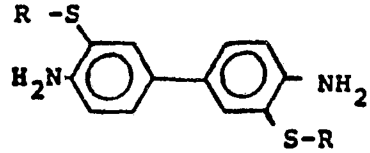

K.Brand, Chem. Ber. *72,* 3463 (1909)

a)

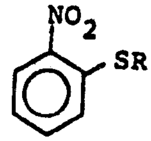

wird mit Zn/NaOH zum Hydrazobenzolderivat reduziert und mittels HCl unter Umlagerung in das Benzidinderivat überführt.

b) Benzidin wird in Eisessig mit Ammonrhodanid und Brom umgesetzt und anschließend mit KOH zum Mercapto-Kaliumderivat des Benzidins verseift. Dieses wird dann mit Alkyl-, Aryl- bzw. Acylhalogeniden in die Thio-Verbindung überführt.

c) Umsetzung von Benzidin mit $S_2Cl_2$ in Benzol, danach alkalische Hydrolyse und Umsetzung des K- oder Natriummercaptids mit Alkyl-, Aryl- bzw. Acylhalogeniden.

II) Herstellung von

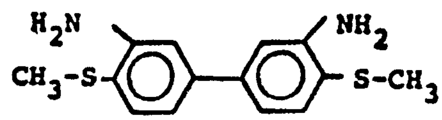

Reduktion der Dinitroverbindung mit Sn/HCl

III) Herstellung von

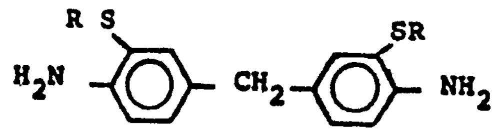

a) Ausgehend von 4,4'-Diaminodiphenylmethan analog zu Ib).

b) Umsetzung von 4,4'-Diaminodiphenylmethan mit $CS_2$ + $S_8$ zum Bis-mercapto benzothiazol-Derivat, danach Hydrolyse mit KOH zum Bis-mercapto-K-Salz. Das K-Salz wird mit Alkyl-, Aryl- oder Acylhalogeniden umgesetzt.

c) Kondensation von 2- bzw. 3-Aminophenylalkylsulfiden mit Formaldehyd.

IV) Herstellung von

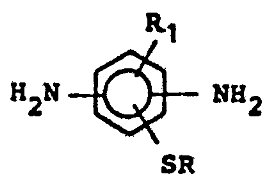

($R_1$ = $C_1$—$C_4$-Alkyl)

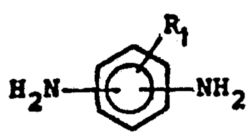

wird diacetyliert und danach sulfochloriert. Das Sulfochlorid wird anschließend nach bekannten Methoden reduziert (z.B. L.Bauer et al., J. Chem. Soc. *1949,* 3434). Das so erhaltene Mercaptan wird gegebenenfalls mit Alkyl-, Aryl- bzw. Acylchlorid umgesetzt. Zuletzt wird das Bisacetamid mittel KOH oder NaOH zum Diamin hydrolysiert.

Das erfindungsgemäße Verfahren, d.h. die Phosgenierung der beispielhaft genannten Diamine zu den entsprechenden Diisocyanaten erfolgt nach an sich bekannten Methoden vorzugsweise unter Mitverwendung eines geeigneten Hilfslösungsmittels wie z.B. Chlorobenzol bei -20 bis 130°C. Geeignete Phosgenierverfahren sind beispielsweise in High Polymers XVI "Polyurethanes", Chemistry and Technology, Part I, Interscience Publishers, New York, London (1962) Seiten 17 ff. beschrieben.

Die bei dieser Phosgenierungsreaktion anfallenden Diisocyanate entsprechen naturgemäß bezüglich ihrer Konstitution den beispielhaft genannten, als Ausgangsmaterial eingesetzten Diaminen. Typische erfindungsgemäße Diisocyanate sind z.B. die in den nachstehenden Ausführungsbeispielen beschriebenen Verbindungen.

Die erfindungsgemäßen Diisocyanate stellen wertvolle Ausgangsmaterialien zur Herstellung von Polyurethanen insbesondere Polyurethan-Elastomeren und Polyurethanschaumstoffen dar. Als Reaktionspartner für die Thiogruppen-haltigen erfindungsgemäßen Diisocyanate kommen alle, in der Polyurethanchemie an sich bekannten Reaktionspartner für organische Diisocyanate in Betracht.

Diese Reaktionspartner für die Diisocyanate weisen vorzugsweise mindestens zwei gegenüber Isocyanatgruppen reaktions-fähige Wasserstoffatome, d.h. mindestens zwei Aminogruppen, Thiolgruppen, Carboxylgruppen oder insbesondere Hydroxylgruppen und ein Molekulargewicht von 62 bis 10 000, vorzugsweise 1 000 bis 6 000 auf.

Vertreter dieser erfindungsgemäß zu verwendenden Verbindungen sind z.B. in High Polyers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunstoff-Handbuch, Band VII Vieweghöchtlen, Carl-Hanser-Verlag, München, 1966, z.B. auf den Seiten 45 bis 71, beschrieben.

Bei der Herstulleng von Polyurethanschaumstoffen werden oft Wasser und/oder leicht flüchtige organische Substanzen als Triebmittel mitverwendet.

Beispiele für Triebmittel sowie Einzelheiten über die Verwendung von Treibmitteln sind im Kunststoff-Handbuch, Band VII, herausgegeben von Vieweg und Höchtlen, Carl-Hanser-Verlag, München 66, z.B. auf den Seiten 108 und 109, 453 bis 455 und 507 bis 510 beschrieben.

Erfindungsgemäß werden ferner oft Katalysatoren mitverwendet. Als mitzuverwendende Katalysatoren kommen solche der an sich bekannten Art in Frage, z.B. tertiäre Amine, stickstoffhaltige Basen wie Tetraalkylammoniumhydroxide, oder Alkalihydroxide oder organische Metallverbindungen insbesondere Zinnverbindungen.

Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 400 bis 10 000, eingesetzt.

Erfindungsgemäß können auch oberflächenaktive Zusatzstoffe (Emulgatoren und Schaumstabilisatoren) mitverwendet werden.

Erfindungsgemäß können ferner auch Reaktionsverzögerer, Zellregler, Pigmente, Farbstoffe, Flammschutzmittel, Stablisatoren und andere an sich bekannte Hilfs- und Zusatzmittel mitverwendet werden.

Die Reaktionskomponenten werden erfindungsgemäß nach dem an sich bekannten Einstufenverfahren, dem Prepolymerverfahren oder dem Semipropolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VI, herausgegeben von Vieweg und Höchtlen, Carl-Hanser-Verlag, München 1966, z.B. auf den Seiten 121 bis 205 beschrieben.

Bei der Herstellung von Polyurethankunststoffen unter Verwendung der erfindungsgemäßen Diisocyanate kommen die Reaktionspartner im allgemeinen in Mengenverhältnissen zum Einsatz, die einem Äquivalentverhältnis von Isocyanatgruppen gegenüber mit Isocyanatgruppen reaktionsfähigen Gruppen von 0,9:1 bis 1,5:1 entspricht, wobei man nach dem bekannten one shot Verfahren oder nach dem Prepolymerverfahren arbeiten kann. Beim Prepolymerverfahren werden bekanntlich die als Ausgangsmaterial eingesetzten Polyisocyanate in einer ersten Reaktionsstufe mit nur einem Teil der Reaktionspartner zur Reaktion gebracht, worauf sich im allgemeinen eine Kettenverlängerungsreaktion der als Zwischenprodukt erhaltenen NCO-Präpolymeren anschließt.

Insbesondere die erfindungsgemäßen Diisocyanate mit nur einem Thioäther-Substituenten in ortho-Stellung zu nur einer Isocyanatgruppe eignen sich hervorragend zur Herstellung von Polyurethankunststoffen nach dem Präpolymer-Prinzip. Bei diesem Verfahren ist es nämlich wesentlich, daß im eingesetzten Diisocyanat Isocyanatgruppen unterschiedlicher Reaktivität vorliegen. Diese unterschiedliche Reaktivität kann im Falle der erfindungsgemäßen Diisocyanate auf einfache Weise durch Variation des Substituenten R eingestellt werden.

Die folgenden Beispiele dienen zur weiteren Erläuterung der Erfindung.

## BEISPIEL 1

In eine Lösung von 400 g Phosgen in 1,25 1 Chlorobenzol werden bei 0°C innerhalb von 20 Minuten 154 g (1 Mol) 2-(methylmercapto)-1,4-diaminobenzol, gelöst in 1,25 1 Chlorbenzol, eingetropft. Anschließend wird während eines Zeitraums von 1 Stunde allmählich auf Rückflußtemperatur (130°C) erhitzt. Ab 80°C wird dabei weiteres Phosgen in die Lösung ingeleitet. Anschließend wird unter weiterem Einleiten von Phosgen 2 Stunden auf Rückflußtemperatur erhitzt. Schließich wird unter allmählichem Abkühlen der Reaktionslösung Phosgen durch 60 minütiges Einleiten von Stickstoff ausgespült, die Lösung eingeengt und das Produkt unter Vakuum destilliert. Es werden 133,8 g 2-(Methylmercapto)-1,4-diisocyanato-benzol (67% der Theorie) erhalten.

| | |
|---|---|
| Schmelzpunkt: | 80—81°C |
| Siedepunkt (0,3 Torr): | 103—110°C |
| NCO-Gehalt (berechnet): | 40,8% |
| NCO-Gehalt (gefunden): | 40,5% |
| Chlorgehalt: | 0.04: |

## BEISPIEL 2

In eine Lösung von 200 g Phosgen in 1,3 1 Chlorbenzol werden bei —20°C innerhalb von 5 Minuten 84 g (0,5 Mol) 2-(Äthylmercapto)-1,4-phenylendiamin, gelöst in 0,7 1 Chlorbenzol, eingetropft. Innerhalb von 3 Stunden wird auf Rückflußtemperatur (127°C) erhitzt, wobei ab 80°C Phosgen in die Lösung eingeleitet wird. Anschließend wird unter weiterem Einleiten von Phosgen

während einer Stunde auf Rückflußtemperatur erhitzt und danach unter allmählichem Abkühlen der Lösung Phosgen durch 30-minütiges Einleiten von Stickstoff ausgespült. Die Lösung wird unter Vakuum eingeengt und das Produkt unter Vakuum destilliert.

Es werden so 70 g (63,5% der Theorie) 2-(Äthylmercapto)-1,4-diisocyanatobenzol erhalten.

| | |
|---|---|
| Schmelzpunkt: | 36°C |
| Siedepunkt (0,1 Torr): | 107°C |
| NCO-Gehalt (berechnet): | 38,2% |
| NCO-Gehalt (gefunden): | 37,7% |
| Chlorgehalt: | 0,08% |

BEISPIEL 3

In eine Lösung von 200 g Phosgen in 1,3 1 Chlorbenzol werden bei —20°C innerhalb 6 Minuten 98 g (0,5 Mol) 2-(n-Butylmercapto)-1,4-phenylendiamin, gelöst in 0,7 1 Chlorbenzol, eingetropft. Anschließend wird die Lösung während eines Zeitraums von 4 Stunden allmählich auf Rüchflußtemperatur (126°C) erhitzt, wobei ab 75°C weiteres Phosgen in die Lösung eingeleitet wird. Anschließend wird unter fortgesetztem Einleiten von weiterem Phosgen 1,5 Stunden bei Rückflußtemperatur gehalten. Unter allmählichem Abkühlen der Reaktionslösung wird anschließend durch 45-minütiges Einleiten von Stickstoff alles nicht umgesetzter Phosgen ausgetrieben. Die Lösung wird schließlich eingeengt und das Rohprodukt unter Vakuum destilliert. Es werden 97 g (77% der Theorie) 2-(n-Butylmercapto)-1,4-diisocyanato-benzol als gelbe Flüssigkeit erhalten.

| | |
|---|---|
| Siedepunkt (0,08 Torr): | 118°C |
| NCO-Gehalt (berechnet): | 33,9% |
| NCO-Gehalt (gefunden): | 33,4% |
| Chlorgehalt: | 0,09% |

BEISPIEL 4

Zu 200 g (2 Mol) Phosgen in 1,3 1 Chlorbenzol werden bei —20°C 173 g (0,5 Mol) 4,4'-Diamino-3,3'-bis-(n-propylmercapto)-diphenylmethan, gelöst in 0,7 1 Chlorbenzol, innerhalb 5 Minuten zugetropft. Anschließend wird die Lösung während eines Zeitraums von 3 Stunden auf Rückflußtemperatur (127°C) erhitzt, wobei ab 83°C langsam weiteres Phosgen eingeleitet wird. Anschließend wird unter fortgesetztem Einleiten von Phosgen 2 Stunden auf Rückflußtemperatur gehalten. Schließlich wird unter allmählichem Abkülen durch 45-minütiges Einleiten von Stickstoff alles nicht umgesetzte Phosgen ausgespült und das Lösungsmittel im Vakuum entfernt. Der Rückstand besteht aus 4,4'-Diisocyanato-3,3'-bis-(n-propylmercapto)-diphenylmethan, welches als braunes viskoses öl anfält.

| | |
|---|---|
| NCO-Gehalt (berechnet): | 21,1% |
| NCO-Gehalt (gefunden): | 20,2% |
| Chlorgehalt: | 0,01% |

BEISPIEL 5

Analog Beispiel 5 wird aus 4,4'-Diamino-3,3'-bis-(äthylmercapto)-diphenylmethan das entsprechende 4,4'-Diisocyanato-3,3'-bis-(äthylmercapto)-diphenylmethan als braunes viskoses Öl hergestellt.

| | |
|---|---|
| NCO-Gehalt (berechnet): | 22,7% |
| NCO-Gehalt (gefunden): | 21,4% |
| Chlorgehalt: | 0,07% |

BEISPIEL 6

Analog Beispiel 5 wird aus 4,4'-Diamino-3,3'-bis-(methylmercapto)-diphenylmethan 4,4'-Diisocyanato-3,3'-bis-(methylmercapto)-diphenylmethan als gelblicher Feststoff hergestellt.

| | |
|---|---|
| Schmelzpunkt: | 55—60°C |
| NCO-Gehlat (berechnet): | 24,4% |
| NCO-Gehlat (gefunden): | 25,5% |
| Chlorgehalt: | 0,05% |

BEISPIEL 7

100 Gewichtsteile eines Prepolymeren mit einem NCO-Gehalt von 3,1 % hergestellt aus einem linearen, bifunktionellen Polyprolylenglykol mit einem mittleren Molekulargewicht von 2000 und der OH-Zahl 56 und 34,2 Gew.-Teilen eines erfindungs-gemäßen Schwefelgruppen-aufweisenden Diisocyanates (4,4'-Diisocyanato-3,3'-bis-methylmercapto)-diphenylmethan) werden bei 30°C mit 8,27 Gewichtsteilen 3,5-Diamino-4-chlorbenzoesäureisobutylester vermischt ($NCO:NH_2$ = 1.1). Das Gemisch bleibt 40 Minuten bei 30—40°C gießbar, wird in eine auf 110°C vorgeheizte Form gegeben und kann bei dieser Temperatur nach 3,5 Minuten entformt werden. Nach 24-stündiger Temperzeit bei 110°C wird ein Elastomeres mit folgenden mechanischen Eigenschaften erhalten.

| | | |
|---|---|---|
| Zugfestigkeit | DIN 53504 | 13,9 MPa |
| Bruchdehnung | DIN 53504 | 504% |
| Weiterreißiderstand | DIN 53515 | 35 KN/m |
| Shore A | DIN 53505 | 76 |
| Elastizität | DIN 53512 | 40% |

**Patentansprüche**

1. Aromatische Diisocyanate, gekennzeichnet durch das ausschließliche Vorliegen von Alkylmercapto- oder Benzylmercapto-substituierten aromatischen Ringen, wobei diese Substituenten zu mindestens einer Isocyanatgruppe in ortho-Stellung angeordnet sind.

2. Aromatische Diisocyanate gemäß Anspruch 1 der Formel

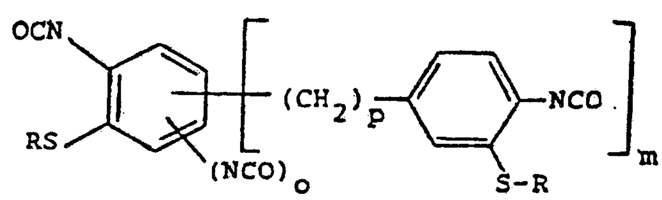

in welcher

R für einen gesättigten aliphatischen Kohlenwasserstoffrest mit 1—4 Kohlenstoffatomen oder eine Benzylgruppe steht,

m für 0 oder 1 steht,

o in Abhängigkeit von m für 0 oder 1 steht, so daß m + o stets 1 ergibt und

p für 0 oder 1 steht.

3. Verfahren zur Herstellung von aromatischen Diisocyanaten gemäß Anspruch 1, dadurch gekennzeichnet, daß man aromatische Diamine, welche ausschließlich Alkylmercapto- oder Benzylmercapto-substituierte aromatische Ringe aufweisen, wobei diese Substituenten in ortho-Stellung zu mindestens einer Aminogruppe angeordnet sind, einer an sich bekannten Phosgenierungsreaktion unterzieht.

4. Verfahren zur Herstellung von aromatischen Diisocyanaten gemäß Anspruch 2, dadurch gekennzeichnet, daß man aromatische Diamine der Formel

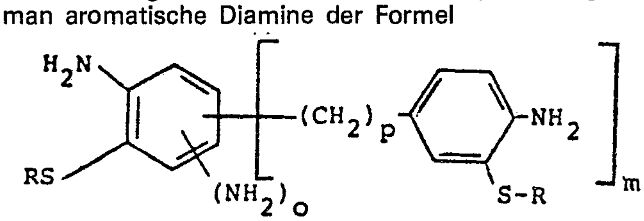

einer an sich bekannten Phosgenierungsreaktion unterzieht, wobei m, o und p die in Anspruch 2 genannte Bedeutung haben.

5. Verwendung der aromatischen Diisocyanate gemäß Anspruch 1 und 2 als Aufbaukomponente bei der Herstellung von Polyurethankunststoffen nach dem Diisocyanat-Polyadditions-verfahren.

**Claims**

1. Aromatic diisocyanates, characterised in that they exclusively contain alkylmercapto- or benzylmercapto-substituted aromatic rings, these substituents being situated in the ortho position to at least one isocyanate group.

2. Aromatic diisocyanates according to Claim 1 of the formula

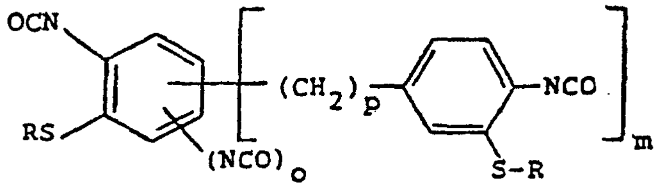

in which

R represents a saturated aliphatic hydrocarbon radical with 1 to 4 carbon atoms or a benzyl group,

m represents 0 or 1,

o represents 0 or 1, depending on the value of m, so that m + o is always 1 and

p represents 0 or 1.

3. A process for the preparation of aromatic diisocyanates according to Claim 1, characterised in that aromatic diamines which exclusively contain alkylmercapto- or benzylmercapto-substituted aromatic rings, these substituents being situated in the ortho position to at least one amino group, are subjected to a phosgenation reaction known *per se*.

4. A process for the preparation of aromatic diisocyanates according to Claim 2, characterised in that aromatic diamines of the formula

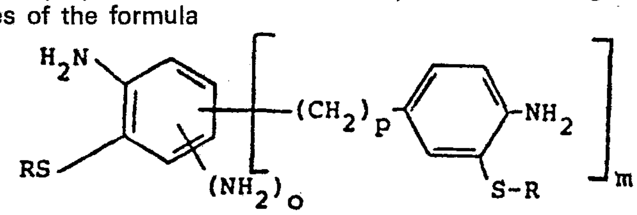

are subjected to a phosgenation reaction known *per se*, wherein m, o and p have the meaning stated in claim 2.

5. The use of the aromatic diisocyanates according to Claim 1 and 2 as components for the synthesis of polyurethanes by the diisocyanate polyaddition process.

**Revendications**

1. Des diisocyanates aromatiques caractérisés par la présence exclusive de noyaux aromatiques à substituants alkylmercapto ou benzylmercapto, ces substituants occupant la position ortho par rapport à au moins un groupe isocyanate.

2. Diisocyanates aromatiques suivant la revendication 1, caractérisés en ce qu'ils répondent à la formule:

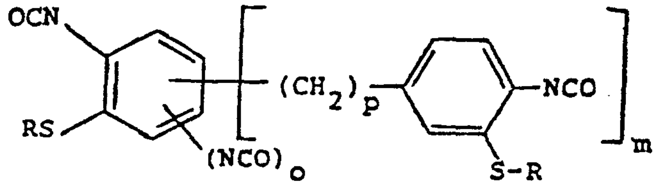

dans laquelle

R est une reste hydrocarboné aliphatique saturé ayant 1 à 4 atomes de carbone ou un groupe benzyle,

*m* est égal à 0 ou à 1,

*o* est égal à 0 ou à 1 en fonction de *m*, de manière que la somme *m* + *o* soit constamment égale à 1, et

*p* est égal à 0 ou à 1.

3. Procédé de production de diisocyanates aromatiques suivant la revendication 1, caractérisé en ce qu'il consiste à soumettre à une réaction connue de phosgénation des diamines aromatiques qui présentent exclusivement des noyaux aromatiques portant des substituants alkylmercapto ou benzylmercapto, ces substituants se trouvant en position ortho par rapport à au moins un groupe amino.

4. Procédé de production de diisocyanates aromatiques suivant la revendication 2, caractérisé en ce qu'il consiste à soumettre à une réaction connue de phosgénation des diamines aromatiques de formule:

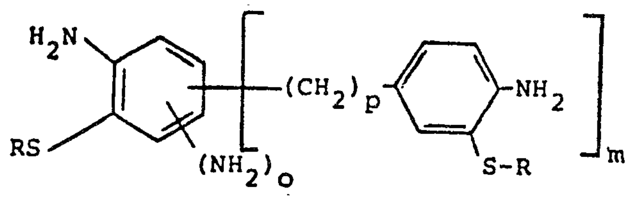

dans laquelle
*m, o* et *p* ont les définitions données dans la revendication 2.

5. Utilisation des diisocyanates aromatiques suivant l'une des revendications 1 et 2 comme composants structuraux dans la production de matières plastiques du type polyuréthanne par le procédé de polyaddition de diisocyanates.